(19) Europäisches Patentamt
European Patent Office
Office européen des brevets

(11) **EP 3 840 714 B1**

(12) **EUROPEAN PATENT SPECIFICATION**

(45) Date of publication and mention
of the grant of the patent:
**13.08.2025 Bulletin 2025/33**

(21) Application number: **19774179.6**

(22) Date of filing: **26.08.2019**

(51) International Patent Classification (IPC):
*A61H 1/02* (2006.01)     *A61H 3/00* (2006.01)

(52) Cooperative Patent Classification (CPC):
**A61H 3/00; A61H 1/0237;** A61H 2201/1215;
A61H 2201/1676; A61H 2201/503;
A61H 2201/5061; A61H 2201/5064;
A61H 2201/5079

(86) International application number:
**PCT/IB2019/057150**

(87) International publication number:
**WO 2020/039409 (27.02.2020 Gazette 2020/09)**

(54) **BIO-INSPIRED ADAPTIVE IMPEDANCE BASED CONTROLLER FOR HUMAN-ROBOT INTERACTION**

BIOINSPIRIERTE ADAPTIVE IMPEDANZBASIERTE STEUERUNG FÜR MENSCH-ROBOTER-INTERAKTION

DISPOSITIF DE COMMANDE BASÉ SUR UNE IMPÉDANCE ADAPTATIVE BIO-INSPIRÉ POUR UNE INTERACTION HOMME-ROBOT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2018 EP 18190653**

(43) Date of publication of application:
**30.06.2021 Bulletin 2021/26**

(73) Proprietor: **ECOLE POLYTECHNIQUE FEDERALE DE LAUSANNE (EPFL)**
**1015 Lausanne (CH)**

(72) Inventors:
• **ORTLIEB, Amalric Louis**
**2013 Colombier (CH)**
• **BOURI, Mohamed**
**1037 Etagnières (CH)**
• **LICHARD, Peter**
**1030 Bussigny-lausanne (CH)**

• **TRACCHIA, Tommaso**
**1260 Nyon (CH)**
• **DENKINGER, Benoît Walter**
**1213 Petit-Lancy (CH)**

(74) Representative: **Grosfillier, Philippe et al**
**André Roland SA**
**IP Attorneys & Services**
**Avenue Collonges 21**
**1004 Lausanne (CH)**

(56) References cited:
WO-A2-2010/027968     KR-A- 20170 027 187
US-A1- 2011 257 764     US-A1- 2017 119 551

• R. JIM?NEZ-FABI?N ET AL: "Review of control algorithms for robotic ankle systems in lower-limb orthoses, prostheses, and exoskeletons", MEDICAL ENGINEERING & PHYSICS., vol. 34, no. 4, 1 May 2012 (2012-05-01), GB, pages 397 - 408, XP055250957, ISSN: 1350-4533, DOI: 10.1016/j.medengphy.2011.11.018

**Description**

CORRESPONDING APPLICATIONS

The present application claims priority to earlier European application N°18190653.8 filed on August 24, 2018 in the name of ECOLE POLYTECHNIQUE FEDERALE DE LAUSANNE (EPFL).

TECHNICAL FIELD AND BACKGROUND ART

Advanced human-robot interaction has been an important field of research for the past decades already. Due to the growing number of robots and applications, the interest in collaborative strategies between man and programmed machines involving physical contact has never been as important as today. In the current application, we are investigating a collaborative strategy to assist people with gait impairments such as neuromuscular disorders or neurological conditions to walk. Impedance control has been widely used with different approaches and various actuation-transmission units with both upper and lower limbs. Impedance can be used as a soft trajectory corrector where a force is provided by the exoskeleton to attract the end-effector along a defined path such as described in references [1] and [2]. Such controllers are trajectory and time dependent and thus quite constraining for the user, see reference [3]. Another type of impedance based controller is called triggered assistance and has been mostly implemented with the upper limbs, see reference [3]. The architecture of control proposed in the current application has been largely investigated in the domain of prosthetics for the lower limb (transfemoral and transtibial prosthesis) and is referred to as "finite-state controller". Such controllers are defined by a periodic sequence of states with state-constant impedance that typically simulates a spring and damper behaviour, see references [4]-[9]. The transition from one state to another is usually based on different events such as heel strike or toe off which are sensed through force sensors located in the prosthesis. Other events such as a muscle activity or joint angle or velocity are also frequently used, see references [4]-[11]. Several activities such as level walking, stairs or slope ascending / descending and sit-to-stand transition have been studied in these papers. A few studies using foot orthosis, see references [12],[13] or complete lower limb exoskeletons (three using the Indego™ device, see references [14]-[16] and two with the Hybrid Assistive Limb (HAL)™ device, see references [17], [18]) implemented similar "finite state" controllers. However, most of these strategies are constructed primarily on events based on the ground reaction forces (e.g. detection of heel strike, displacement of the center of pressure) and also on events related to the motion of the joints.

US 2011/257764 A1 discloses a system for controlling a single- or multi- powered robotic system according to the preamble of claim 1.

SUMMARY OF THE INVENTION

The invention is set out in the appended set of claims.

SUMMARY OF THE DISCLOSURE

Medical and personal exoskeletons of the lower limbs have successfully been oriented toward persons with complete spinal cord injury (SCI). Persons with less disabling disorders such as muscular dystrophy, multiple sclerosis, hemiplegia or incomplete paraplegia, however require more freedom of motion and greater possibilities for interaction with the device. An assistive strategy relying on a finite-state controller is addressed in the present application and implemented about the hip flexion-extension during walking.

Some aims and objectives of the present invention are the following:

- ) Improve human-robot interactions;
- ) Mimic muscles behaviour at joint level;
- ) Follow a predictive behaviour that can be anticipated and thus better managed by the user (preferably);
- ) Improve safety as each state is stable (stable if system is dissipative);
- ) Easy and quick personalized level of assistance at any joint;
- ) Increase and promote implication of the user in the motion;
- ) Allow a joint and synchronous effort from both the user and the robot
- ) improve the devices and methods known in the art.

The aims and objectives of the present invention are of course not limited to the above and other aims may be achieved by the present invention as well.

Some specific activities primarily considered by the present invention are the following:

- ) Level walking
- ) Up- and down- hill walking
- ) Stairs climbing/descending
- ) Sit-to-stand transitioning
- ) Crouching
- ) Load or tool lifting or carrying with upper limbs
- ) Object reaching with the upper limbs.

Other aspects and characteristics of the present invention are the following:

- ) Allow to stop anytime (after each step) and not to take a step (even if one is falsely triggered)
- ) Synchronize completely with the user - requires a minimum force input from the wearer
- ) Adapt assistance and gait characteristics of the patient with a minimum of parameters
- ) Preferably use a backdrivable actuation system or a series elastic actuator (or an actuation with compensated irreversibility)
- ) Preferably use a cinematic sensor at one joint, specifically at both hip flexion joints
- ) Allow to manage the measured joint and/or any other joint on the same robot and/or any other joint on a distant robot.

Preferred technical aspects:

- ) Finite state based and not trajectory based
- ) 3 phases (static, flexing, extending (=flexing opposite leg))
- ) a 4th(+5th) phase can be introduced using ground-foot contact detection (pre-flexing left, pre-flexing right)
- ) Impedance control
- ) Control of hip flexion/knee flexion/hip adduction joints
- ) Detection of motion through hip velocity
- ) Robustness may be augmented using ground reaction force in addition
- ) Smooth transition of impedance with velocity and/or acceleration limit of the target.

The activities considered in the frame of the present invention are of course not limited to the above and other activities may be supported using the principle of the present invention as well.

Applications of the present invention may be the following while used in combination with a wearable robotic device (but not exclusively):

- ) Improvement of mobility for people, amputees or patients with neuromuscular or neurological conditions;

- ) Improvement of working capacity in people performing physical tasks.

Other applications in other fields of use are also possible in the scope of the present invention which is not limited to the applications disclosed therein.

The present application and the examples focus on three major issues. The first one looks at the feasibility and effectiveness of using an active impedance controller with a non-elastic actuator, where typically a transmission ratio of approximately 1:200 allows a torque of about 40 Nm. Secondly, the detection of intention based on volitional motion recognition is evaluated regarding the limitations encountered by the targeted populations. Finally, the appropriateness of the three states variable impedance controller is addressed with two pilots, one healthy and one with muscle weakness due to a limb girdle muscular dystrophy (LGMD).

An AUTONOMY™ exoskeleton (for example as disclosed in WO 2018/065913) used in the examples described herein is a lower limb device comprising three actuated degrees of freedom per leg about the hip (flexion and abduction) and the knee (flexion) while the ankle is semi-rigidly constrained. Results show that the implementation of impedance behaviours on a rigid transmission shows satisfactory performances while it necessitates some active compensation. The controller has been successfully and safely used by both pilots, demonstrating a promising usability to assist people with incomplete gait impairments. Of course, the present invention and its principle is not applicable only to this exoskeleton but may be used in others in an equivalent fashion.

In embodiments, the invention concerns systems and methods as described in the present application and examples.

In embodiments, the invention concerns a structure using a controller to assist gait for a person or a patient (for example having neuromuscular diseases). The structure may be, for example, a prosthesis, an exoskeleton, or a robot, or another equivalent structure or any combination thereof. Preferably, the controller is an active impedance controller.

Preferably, but not exclusively, the structure according to the invention may be a lower limb device.

In embodiments, the structure may comprise three actuated degrees of freedom, for example per lower limb. The structure may comprise less than three or more than three degrees as well and may be placed on another limb.

In embodiments, the invention concerns a method for controlling a single- or multi- powered system as defined herein (such as an exoskeleton, a prosthesis, a collaborative robot, or a combination thereof etc.) that is physically interacting with a user (human or animal).

In embodiments of the method the structure joint(s) may be controlled in force or impedance by a low level controller, as for example running on an electronic motor drive with a high and real time refreshing rate (typically about 1kHz or higher); and/or the joint(s) output force(s) may be determined by a high level controller;

According to the invention, the high level controller is governed by some voluntary motion from the user. The controller may be governed by other parameters as well, or a mix of parameters (from the user or not). The high level controller can for example be implemented either directly on the motor drive or on an embedded computer (e.g. single board computer) communicating with the motor drive. The refreshing rate of the high level controller (including the communication, if any) is preferably lower than the rate of the low level controller. Typically, a refreshing rate higher than 50 Hz is required.

In embodiments, the low level controller may be a closed loop with force/torque sensor at the joint or an open loop with a precise model of the actuator-to-joint's transmission impedance. Other equivalent constructions are possible as well.

In embodiments, the high level controller may comprise several phases each simulating different mechanical impedance behaviour including an elastic behaviour, a viscous behaviour, plus possibly a force field (e.g. gravity compensator) and other behaviour.

In embodiments, each phase of the high level controller is activated based on given events/conditions depending on voluntary motions or force induced by the user, or not, and/or possibly also from some interactions with the environment (e.g. measure of ground reaction force, detection of a mounted tool). These are only examples of possible activation signals that may be used in the context of the invention.

In embodiments, a smooth transition may be operated over a short given time to avoid abrupt change of current/force at the joints.

In embodiments, the impedance behaviour of each phase and joint may be parameterized and/or may be accessed through a user interface so that it may be tuned and/or adapted by a user or an operator to best fit the user need.

In embodiments, the impedance behaviour of each phase may be parameterized and/or tuned and/or adapted by an algorithm to adjust to the user need, preferably without the need of a human intervention.

In embodiments, the invention concerns a system as defined in the present application to carry out the method as defined in the present application.

The system is a robotic system, such as an exoskeleton, or a prosthesis, or a robot or another equivalent structure or device/system.

In embodiments, the invention concerns a system with at least one actuator and a control unit (a robotic system) controlled using a finite state approach where each state corresponds to a defined active impedance, where at least one change of state is defined/triggered by the cinematic of a joint of a pilot (amplitude and direction of the motion velocity). The pilot may be human or animal.

In embodiments, the robotic system is made of multiple joints, of which a subgroup may share the same finite states but with different impedance.

In embodiments, the pilot is in direct contact with the robot and the cinematic sensor is located on the robot.

In embodiments, the pilot wears the robotic system and the robotic system is actuating at least one or a plurality of joint(s) of the pilot.

In embodiments, the finite state controls are adapted to a walking activity.

In embodiments, the cinematic sensor is located at the hip (flexion) joint and the actuated joints comprise hip flexion/knee flexion/hip abduction/ankle flexion.

In embodiments, a condition of interaction force between the pilot and robot / pilot and environment / robot and environment is additionally used.

In embodiments, a smooth transition between two states is introduced to avoid brutal change of force. A velocity and/or acceleration limit is introduced on the equilibrium target position of the impedance.

The invention concerns methods for controlling a single- or multi- powered robotic system, such as an exoskeleton, a prosthesis or a collaborative robot, that is physically interacting with a user where the system comprises at least one actuated joint. According to methods, the robot joint(s) is/are controlled in force by a low level controller using an impedance control; the joint(s) output force(s) is/are determined by a high level controller using a finite state control; and the high level controller finite state control is governed by a voluntary hip motion from the user reaching a predetermined trigger,

In embodiments, the finite state control comprises at least two phases simulating mechanical impedance behaviour including static, flexing and extending.

In embodiments, the method comprises an additional phase, i.e. a third phase.

In embodiments, the methods may further comprise additional phases or a repetition of phases.

In embodiments, a phase (for example an additional phase) is triggered by a contact detection. The contact may be for example on the ground or another contact.

The motion is a hip motion. Other motions may be used in an equivalent fashion.

In embodiments, the motion that is detected may be a velocity.

In embodiments, the impedance behaviour of each phase and joint is parameterized and tuned/adapted to fit the user's needs.

In embodiments, the finite state and phases are adapted to a walking activity.

In embodiments, the robotic system is worn by the user or is a remote system controlled by the user.

In embodiments, the actuated joint(s) comprise(s) hip flexion and/or knee flexion and/or hip abduction and/or ankle flexion.

The present invention also concerns a device, for example a robotic system to carry out the methods.

BRIEF DESCRIPTION OF THE DRAWINGS

Figure 1 illustrates the mechanical equivalent of the simulated impedance behaviour reproduced by the controller that correspond to a pair of antagonist muscle and a load at some distance of the joint.

Figure 2 illustrates the generic equation of the impedance behaviour actively simulated by the controller with parameters and measured elements.

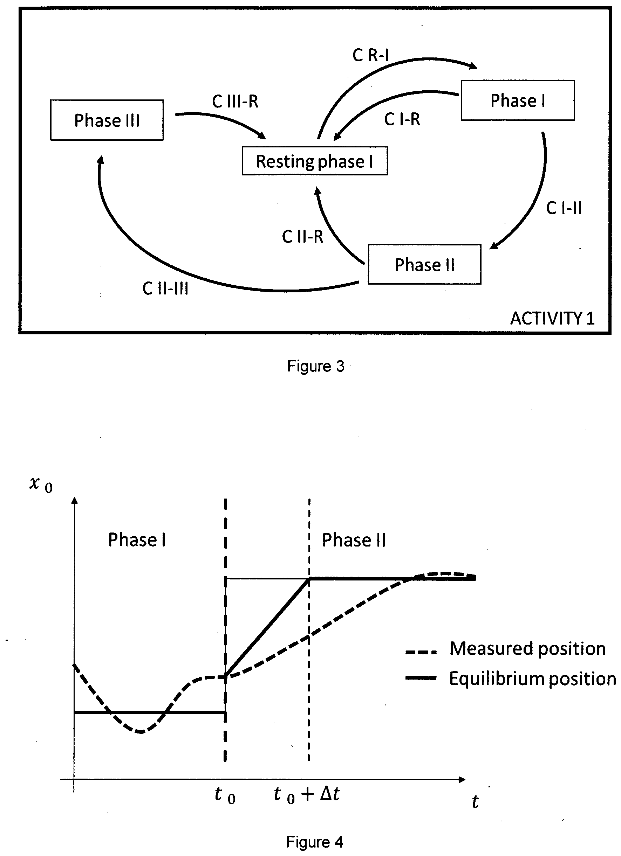

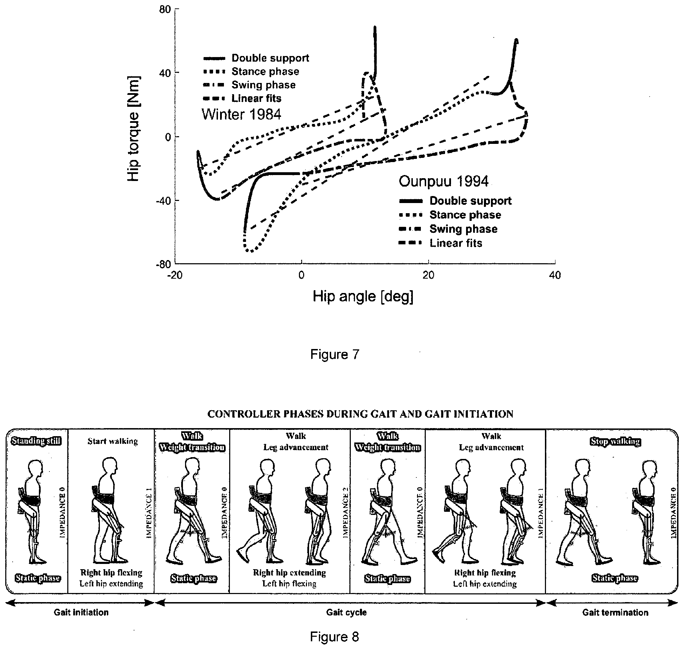

Figure 3 illustrates an example of the management of the different phases for a given activity where the transition from one phase to the other is based on conditions detecting voluntary motions by the user. For example, starting from the center frame ("Resting phase I"), the controller will switch to "Phase I" if the condition "C R-I" is met. It will then stay in "Phase I" until one of the conditions "C I-R" or "CI-II" is met and switch the controller into "Resting phase I" or "Phase II" accordingly. The same principle will be used from Phase II and Phase III illustrated in this figure. The conditions, which are booleans, are constantly checked while the controller is running. A concrete example can be: where "phase I" leads to a flexion motion of one joint while the "resting phase I" attracts the joint to a neutral position. In this context, the condition "C R-I" to switch from "resting phase I" to "phase I" could be a flexion velocity induced by the user higher than a given constant threshold or trigger value. Once in "phase I", the condition "C I-R" to come back to "resting phase I" could be a flexion velocity lower than a given threshold constant. Alternatively, the condition "C I-II" to go to phase II from phase I may be an extension velocity higher than a predetermined threshold or constant value. Once in phase II, as for phase I, the return to "resting phase I" can be triggered if the extension velocity is lower than a given threshold constant or trigger value. Examples of such phases are illustrated in figure 8.

Switching between different phases is hence triggered by the activity of the user of the device.

Figure 4 illustrates how the position of equilibrium is moved linearly from the current position of the joint at the moment of the phase transition to the new phase equilibrium position to allow a smooth transition between phases.

Figure 5 illustrates an AUTONOMYO™ lower limb exoskeleton with its six actuated degrees of freedom at the hip and knee flexion/extension and at the hip adduction/abduction. On left, a front-side view at 45°. On right, a back-side view at 45°.

Figure 6 is an illustration of estimated model 1 (active torque) and model 2 for the torque at the robotic hip joint in comparison with the measured torque. The angle is given here to show the motion of the joint. A constant motor torque is applied while the experimenter is moving the robotic joint.

Figure 7 illustrates the hip flexion/extension torque during walking versus hip angle as reported in the literature by Winter and Ounpuu, see references [19], [20]. Curves are split along the different gait phases, i.e. double support, stance and swing phases, to highlight the constant spring-like phase-related behaviour.

Figure 8 is an illustration of the different phases of the controller from gait initiation to termination through a full gait cycle. Impedance is represented by its theoretical mechanical equivalent which is a fixed element linked to the femur segment by spring. The fixed element (i.e. large bar) reflects the simulated equilibrium angle.

In this figure 8, it is shown how gait is initiated and terminated and how walk can be perpetuated. Gait (or a step) is initiated while the controller detects an initiation by the user, marked by a certain hip flexion velocity. The controller switches from "static phase" to "hip flexing phase" (see the phases illustrated in figures 3 and 8) and impedance state is turned on to assist the user go forward. In the following, the step is terminated when the hip flexion decreases in velocity and the controller switches back to the "static phase". The step termination is inevitable as the hip flexion naturally stops. Perpetual walking is generated while steps are continuously initiated. Conversely, gait is terminated while the user does not trigger any more hip flexion.

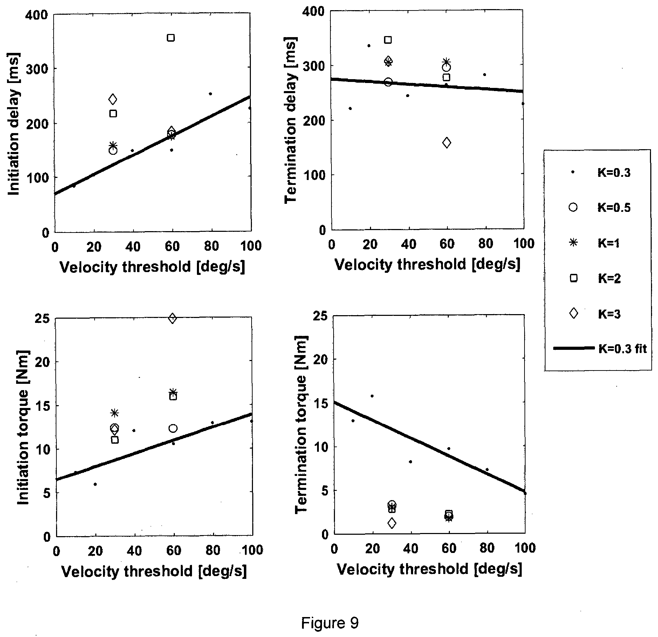

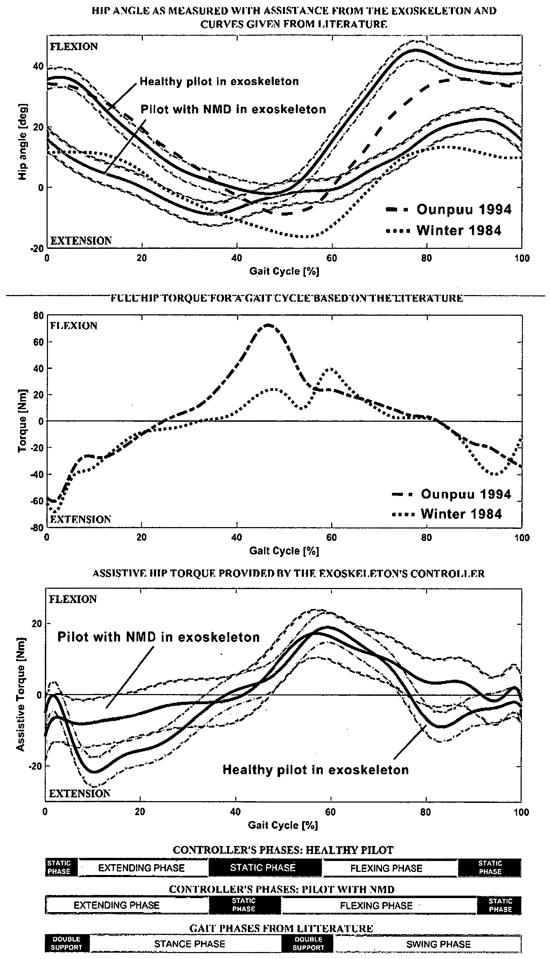

Figure 9 illustrates the effects of the velocity threshold $V_{lim+}$ and stiffness parameter K in the static phase, (top) on the delays and (bottom) on the triggering torques.

Figure 10 illustrates Kinematic and dynamic results of a healthy pilot and a pilot with a neuromuscular disease (NMD) assisted by the exoskeleton, and data from the literature with healthy adults.

## DETAILED DESCRIPTION

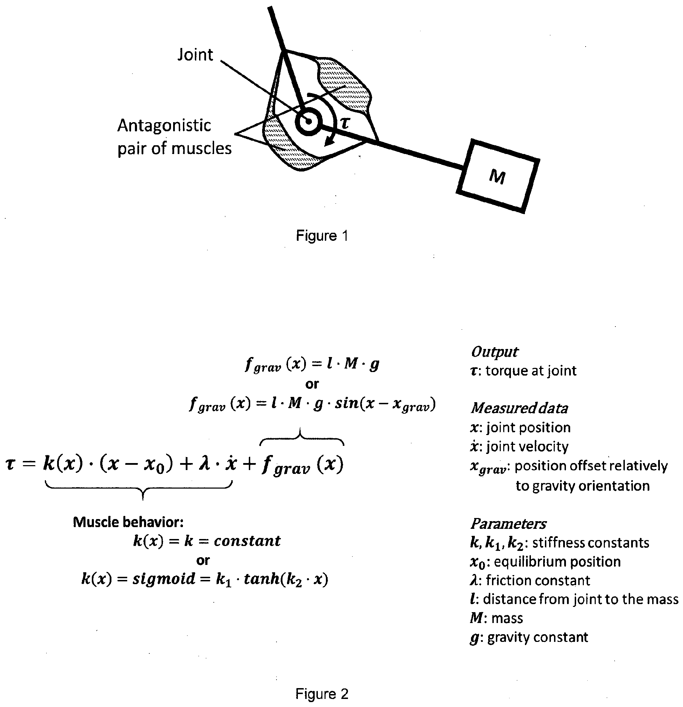

The general concept of the present application and invention is a method for controlling a single- or multi-actuated robot in physical interaction with a person or animal which is called "the user" or "the pilot". The method comprises a low level controller and a high level controller. The low level controller includes any control approach and methods that allows to control any of the actuation unit to provide a desired torque at any joint of the robot (so-called "impedance control"). The high level controller is based on a finite-state controller where the different states are called phases. These phases allow to determine all the desired torques for all the joints given the measured kinematics of the robot. Thus, to each phase and each joint of the robot correspond a simulated mechanical impedance behaviour mimicking a musculoskeletal joint with a load as presented on Figure 1. It corresponds to the behaviour of a visco-elastic system with a mass attached to it. The corresponding expression of the desired joint torque is illustrated on Figure 2 as an example.
As shown on Figure 2, to each equation corresponds a set of parameters (e.g. stiffness, viscosity, mass). These sets of parameters are selected for a given activity, phase and joint and allows a personalization or tuning of the support provided by the robot to the limbs of the user. Keeping the impedance behaviour simple and the number of phases low allow to facilitate the personalization of the action of the robot.
A key aspect of the current application is the management of the different phases (for example as illustrated in figure 8) that is based on voluntary motions of the user that can be detected by position/velocity sensors located at the robot joint or by force sensors measuring interactions with the environment. The transition from one phase to the other respect thus logical conditions (e.g. left hip velocity > 30°/s) such as shown on Figure 3 and explained above. As presented in the following, a minimal force and delay are preferably needed to detect an intention of the user. The controller can also include some resting phases that are not triggered by voluntary motions but the absence of them or by motions that are under a predetermined trigger value (for example a predetermined velocity) also named threshold constant in the present application.
Preferably, the controller includes a smooth impedance transition function as current/force nonlinearities are a source of perturbation and discomfort for the user and appear typically at phase transitions. In order to avoid them, a progressive transition over a certain time period (preferably short) can be implemented to smoothly pass from one phase to the other. It comprises moving the position of equilibrium linearly from the current position of the joint at the moment of the phase transition to the new phase equilibrium position as illustrated by Figure 4.

## EXAMPLE 1

### I. Introduction

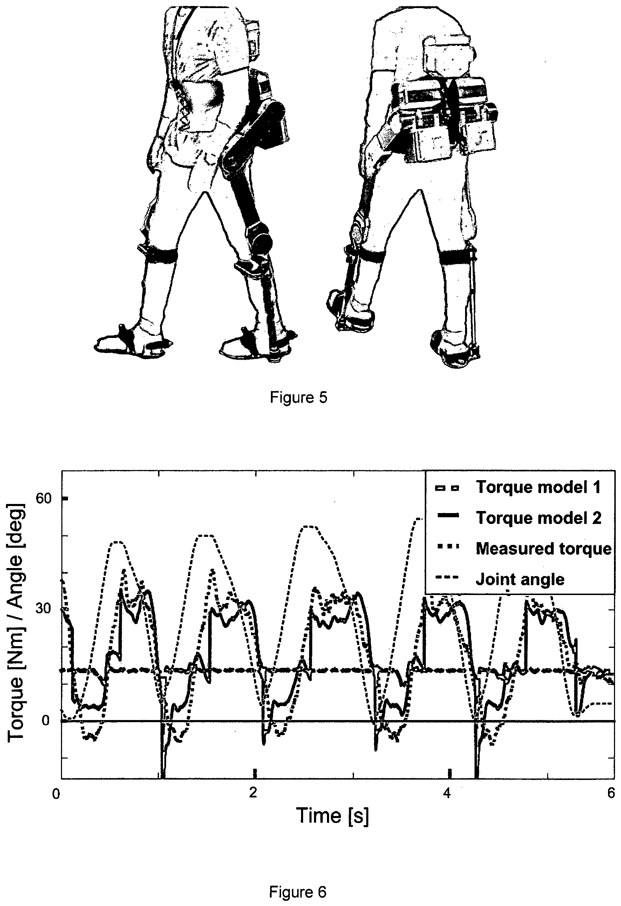

According to the present invention, an active variable impedance controller using a finite-state approach designed for people with residual ability to ambulate is addressed. In order to involve the user in the ambulation process, a strategy requiring motion from the wearer is used in order to initiate the stepping (or a motion). The present application covers different aspects. First, the adequacy of the rigid actuation-transmission unit in the scope of impedance control is examined. Secondly, the control scheme is described and its triggering properties are evaluated. Finally, the controller's impedance is tuned for two pilots/users, one healthy and one with neuromuscular disease. Gait kinematics and dynamics are collected in order to evaluate the collaboration of the controller and the pilots.
An exoskeleton AUTONOMYO™ (Fig.5) is taken as the investigation platform. The device has been designed to assist people with neuromuscular or neurological impairments where a tradeoff between low impedance of the actuation (high backdrivability) and high power is key. AUTONOMY™ counts three actuated degrees of freedom (DoFs) per leg, i.e. two at the hip and knee flexion/extension plus one at the hip adduction/abduction. Actuators, electronics and batteries are remotely located in the back of the user in order to optimize compactness and inertia along the limbs. More details can be found in references [21], [22].

## II. Identification of the Exoskeleton Hip Joint Actuation Model

### A. The transmission and set-up

The current torque model focuses on the hip flexion/extension actuation that is realized by:

- ) A brushless motor (EC-i 40, Maxon Motor AG, Switzerland)
- ) A custom three stages gearbox (GP42 HP, Maxon Motor AG, Switzerland) with a 74:1 transmission ratio
- ) A wire-cable of diameter 2.0 mm (Carlstahl Technocables, Germany) and pulleys with a 3:1 transmission ratio.

In order to measure the force transmitted to the exoskeleton's joint, a force sensor (Strain Gauge - Micro Load Cell CZL635, Phidgets Inc, Canada) with a range of 500N is used. The sensor is fastened to the segment in parallel with the femur, preferably at a distance of 0.36m from the exoskeleton's hip joint. It is sampled at 1 kHz and filtered with a low pass filter with a cutoff frequency of 16 Hz. The motor is controlled in current using a custom drive, see reference [23] and the position is measured using encoders at the motor level with a resolution of 1000 pulses.

### B. Method

In order to model the relationship between the torque at the hip joint and the input current in the motor, a parametric model with linear regression based on least square error minimization is computed for the identification, see equations (1)-(5). An iterative approach allows augmenting the model while evaluating the relevance of the added term step by step. The expected and candidate variables are: the motor current (motor torque), the torque at joint (efficiency of the transmission), the acceleration (inertia of the actuation), the sinus of the angular joint position (gravitational effect), the velocity (viscous friction, and direction of velocity at low velocities for the dry friction), and the sign of the motor power.

$$Y = X\beta + \varepsilon \qquad (1)$$

$$Y = \{\tau_{joint}(1), \tau_{joint}(2), \dots \tau_{joint}(n)\}^T \qquad (2)$$

$$\beta = [\beta_0, \beta_1, \dots \beta_m]^T \qquad (3)$$

$$X = \begin{bmatrix} x_1(1) & x_2(1) & \cdots & x_m(1) \\ x_1(2) & & \ddots & \vdots \\ \vdots & & & \\ x_1(n) & & \cdots & x_m(n) \end{bmatrix} \qquad (4)$$

$$\min(\varepsilon): \quad \hat{\beta} = (X^T X)^{-1} X^T Y \qquad (5)$$

Where Y is the external torque applied at the joint ($\tau$joint) vector at different time, X is the matrix of variables or functions of variables that are recorded (variables of the model(s) as presented above such as, joint angular position, velocity, acceleration, torque at joint, power in the motor) at corresponding time, $\beta$ is the vector of coefficients, $\varepsilon$ is the vector of errors and the symbol '^' refers to an estimation of the value.

Data were collected in two manners. First, in position control where the experimenter applies perturbation forces while the motor follows sinusoidal trajectories. Second, a constant current is set to the motor while the experimenter pulls and pushes the segment to induce back and forth motions.

### C. Results

Two models are described and evaluated. The first model (6) considers the transmission ratio and a constant efficiency coefficient to express the torque at the hip joint in function of the motor torque. Model 1, i.e. (6), is used as a basic model of reference, it represents the active torque. The second model (7) is the result of the iterative process described previously with equations (1)-(5).

$$\tau_{joint\_1} = \eta_+ \cdot i \cdot \tau_{motor} \qquad (6)$$

$$\tau_{joint\_2} = -lmg \cdot \sin(\alpha) - I \cdot \ddot{\alpha} + \eta_\pm \cdot i \cdot \tau_{motor} \qquad (7)$$

$$lmg = 11.5 \, [Nm]$$

$$I = 0.025 \, [Kg \cdot m^2/deg]$$

$$\eta_\pm = \begin{cases} \eta_+ = 0.55, \, if \, Power = (\tau_{motor} \cdot \dot{\alpha}) \geq 0 \\ \eta_- = 1.3, \, if \, Power = (\tau_{motor} \cdot \dot{\alpha}) < 0 \end{cases}$$

where $\tau_{joint}$ is the output torque at the joint measured by the force sensor, $\tau_{motor}$ is the input torque at the motor, i is the transmission ratio, a is the angular position at the joint and '·' and '··' denotes the first and second derivatives over time (joint velocity and acceleration respectively). $I_{mg}$, I and $\eta$ are coefficients of the gravitational term, inertial term and torque ratio (efficiency of the transmission) respectively.

Two terms for the efficiency of the transmission, $\eta+$ and $\eta-$ are found and are related to the sign of the power. Indeed, when the motor contribution is more important than the opposite forces at the joint (i.e. the power as given by (7) is positive) then losses in the transmission reduce the transmitted torque from the motor. In this case a factor of 0.55 is found between the torques at joint and at motor. Conversely, when the torque at the joint is bigger than the motor contribution, the power at the motor is negative (i.e. the rotation of the motor is opposed to the torque direction). In this case, the torques at the joint perceived by the motor are diminished due to losses in the transmission. It results that a ratio of 1.3 is obtained between the two torques.

The performances of the fit are difficult to address in a thorough manner. Identification gives more repetitive results with a constant motor torque target while the experimenter is applying forces to move the joint. In position control, unstable and non-repetitive fluctuations appear. A sample of the results from both model 1 and 2 are shown on Fig.6 while a constant active motor torque of 13 Nm is applied and motion is physically controlled by the experimenter.

The three elements, i.e. the motor inertia, the robot structure under the gravitational force and the active/dissipative change of efficiency, have an important contribution to the torque applied at the robotic joint. The torque models are evaluated in functions of the root-mean-square deviation RMSD over the nominal torque range of the motor (about 44 Nm). Torque model 1 reports an RMSD of 6.6 to 7.6 Nm while model 2 has an RMSD of 4.3 to 4.8 Nm. Model 2 presents more precise torque estimations as the motor torque augment.

D. Discussion

The identified hip joint's impedance of the exoskeleton, as defined by model 2, presents an RMSD about 4.5 Nm. In comparison with the continuous torque capacity of the motor reported at the joint, between 24 Nm and 57 Nm, the deviation seems quite high (8-19% of the continuous torque). However, the deviation recorded seems to be mostly due to noise in the acquisition of the acceleration, see Fig.6, and the following estimation of the effect of inertia. Oscillations at high frequencies are nevertheless damped through the electric inductance of the motor, the impedance of the transmission units and eventually the physical interface with the user. On average, the error between the identified model and the measured torque varies between 0.5 and 3.5 Nm. Regarding the latter result, an open loop control with an estimation of the torque transmitted to the user based on model 2 is judged satisfying as the error lies within 10% of the desired torques.

III. Three-Phases Variable Impedance Gait Assistive Strategy

The human biological actuation units are composed of muscles and tendons, which are fastened to bones distant one from the other by one or more joints. Such actuation units can be seen as series elastic actuators because of the compliance of both muscle and tendon tissues. The conjunction of agonist and antagonist muscles turns the body joints into variable impedance systems. Human locomotion strategies are largely built on these characteristics to ensure both stability and energetically optimized performance. Variable stiffness controllers mimic biological strategies to better assist the pilot while being user friendly.

The key characteristics of a good assistance are the following: first, it should transfer a notable amount of force to the user in order to augment her/his performances or in order to compensate for a lack of strength. Second, it should minimally constrain the user temporally or spatially. An exception is the presence of compensatory or pathological motions that need to be constrained to avoid clinical complications by the user (e.g. knee hyperextension during stance).

A. Variable impedance controller

The hypothesis underlying this approach comes from the fact that joint impedance during activities such as walking appears to mimic a spring effect with variable stiffness over a limited number of phases. Gait dynamics and kinematics from D. Winter, see reference [19] and S. Ounpuu, see reference [20] can be represented graphically to highlight this spring-like behavior as shown on Fig.7 for the hip flexion/extension.

It is hypothesized that the natural gait is generated with constant joint stiffness during two intervals similar to the stance and swing phases lasting both about 40% of the cycle. The two double support phases, each about 10% of the cycle are reported as transitional states.

The muscle contribution is modelled as a spring effect about the joint. We propose to transmit a similar impedance effect through the wearable exoskeleton. Equation (8) expresses the natural torque at the joint where $k_m$ is the muscle-tendon stiffness and $\alpha_0$ is the angle at equilibrium. Equation (9) is the torque resulting from the addition of an impedance controller through the exoskeleton to the muscle activity, where $k_{exo}$ and $\alpha_{0exo}$ are the simulated stiffness and angle at equilibrium by the exoskeleton. The final impedance of the joint assisted by the exoskeleton is reported in (10) for the stiffness and (11) for the angle at equilibrium.

$$\tau_{joint} = k_m \cdot (\alpha - \alpha_0) \qquad (8)$$

$$\tau_{joint}' = k_m' \cdot (\alpha - \alpha_{0m}') + k_{exo} \cdot (\alpha - \alpha_{0exo}) \qquad (9)$$

$$k_{assisted} = k_m' + k_{exo} \qquad (10)$$

$$\alpha_{0assisted} = \frac{k_m' \cdot \alpha_{0m}' + k_{exo} \cdot \alpha_{0exo}}{k_m' + k_{exo}} \qquad (11)$$

Equations (8) to (10) show that the contribution of the muscles and the exoskeleton are linearly and proportionally combined. Simultaneously, the resulting angle at equilibrium is the weighted average between the individual angles at equilibrium over the individual stiffness ratios. Thus, the range of motion and level of assistance can easily be modulated following the controller's angle and stiffness parameters.

B. Phase detection

As discussed above, the controller comprises the simulation of impedance behaviours that evolves over the different phases of gait. A robust way to detect stance and swing phases is to use contact or force sensors under the feet. However, an approach based on the kinematics is proposed and is able to predict motion intentions while the foot is still in contact or before it is in contact with the ground.

Initial investigations indicate that the hip flexion velocity is a good predictor for the detection of the different impedance states. Three phases are proposed as candidates and are called "hip flexing", "hip extending" and "static" phases, see figure 8. These phases are similar, respectively, to the swing, stance and double support standard phases. Equations (12)-(14) express the conditions for such phase detection, where $V_{hip}$ is the velocity measured at the hip joint on the reference side (e.g. left hip), $V_{opp\_hip}$ is the velocity measured at the opposite side (e.g. right hip), $V_{lim+}$ is a constant parameter defining the phases' limits.

Similarly, during the swing and (single) stance phases, the hip flexing and hip extending phases are intended to be mirrored in both the left and right legs. In order to ensure the symmetry of the controller, the same event is tested on both legs (12) and (13) to detect flexion. In case of a hip flexing phase on one leg, the opposite leg is automatically turned into hip extending mode. When neither leg is flexing, either the user is not walking or she/he is walking and in a transition state. The different phases and impedance of the controller in the context of gait initiation, continuous walking and gait termination are illustrated on Fig.8.

Hip flexing phase condition: $\qquad V_{hip} > V_{lim+} \qquad (12)$

Hip extending phase condition: $\qquad V_{opp\_hip} > V_{lim+} \qquad (13)$

Static phase conditions: $\qquad \begin{array}{c} V_{hip} \leq V_{lim+} \\ V_{opp\_hip} \leq V_{lim+} \end{array} \qquad (14)$

C. Management of gait initiation and termination

The phase detection allows coordination of the controller by the motion of the user. A weak phase detection would lead to poor assistive results. Gait initiation and termination with poor detection performances could lead to hazardous stepping or immobilization of the user with potential dramatic consequences. As the controller targets individuals with significant muscle weakness, particular attention is aimed at the metrics of gait initiation and termination. The metrics are selected to be the delay between the intention of motion and the effective detection of this intention and the amount of force the user need to apply before the system detects an intention. As presented on Fig.7, the detection of gait initiation or termination uses the same scheme as for the phase detection.

1) Gait initiation (figure 8)

To initiate gait, the user stands in the still position which corresponds to the static phase of the controller. In order to start walking, flexion of one hip up to the velocity threshold $V_{lim+}$ should be induced such that the controller phase will turn into hip flexing for one leg and hip extending for the opposite leg. The user must provide enough force to trigger a flexion motion. This force depends on both the passive and active impedance, which are mainly the dry friction and the torque in static phase. The force is also function of parameters, i.e. the velocity threshold $V_{lim+}$.

Time delay and triggering torques required to pass from a static to a hip flexing phase are investigated using the same setup as for the characterization of the actuation unit where the force is operated by hand through a force sensor. The example comprises six values of $V_{lim+}$ ranging from 10 to 100 [deg/s] and four values of stiffness in static phase from 0.5 to 3.0 [Nm/deg]. Results are presented on Fig.9 for the detection delay and torque required. Each data is averaged over a repetition of five measurements.

2) Gait termination (figure 8)

Gait termination is defined as the controller turns into static phase and stays in that phase. The transition from flexing/extending phases to static phase is usually natural. It can occur either as the swinging leg reaches a stable (maximum) angle of flexion or as the wearer makes early contact with the ground. The static phase occurs at the end of each flexing phases, as the hip direction needs to revert to go forward. Gait can thus be terminated at the end of any step.

3) Influence of parameters

Results of investigations on gait termination are provided on Fig.9. Globally, one can denote that the parameters of velocity and stiffness have opposite effects on the detection of initiation versus termination. The delay and torque necessary for initiating walking increase with the velocity threshold and the controller stiffness in static phase. Thus, a low velocity threshold is more adapted for people with muscle weakness. However, time delay and torque required to stop walking are lowered by increasing the velocity threshold and the static phase's stiffness parameter. In fact, when the velocity threshold is low, the controller can misinterpret tiny motions with intentions of motion and can induces unwanted oscillations. A good compromise between stability and low initiation torque can be found in a range of velocity threshold between 30 and 60 [deg/s] which are the preferred values in the frame of the present application.

IV. Evaluation of the Control Strategy

The three-phase variable impedance gait assistive strategy is used in a haptic context where the human-robot interaction is bi-directional. It is important for the evaluation to take place in the context defined originally, i.e. in overground walking with the exoskeleton in assistance mode.

A. Method

Two pilots, one healthy and one with a neuromuscular disease (NMD) walked about 12 meters with the AUTONOMY™ exoskeleton. Both pilots were similar in height and weight (about 185cm and 70-80kg). The affected pilot has a limb girdle muscular dystrophy with quasi-symmetrical strength in the lower limbs which is: good about ankle dorsi- and plantar flexion, moderate about hip and knee extensions and poor about hip and knee flexions.

The exoskeleton is controlled with the three-phase variable impedance strategy, where the impedance mimics a spring mechanism. A damping effect is also provided during the flexing and extending phases in order to avoid instability in the controller and particularly during transition between phases. The general form of the impedance is written in (15), while the parameters depending on the phase and on the pilots are reported in Table I.

$$\tau_{assist} = k \cdot (\alpha - \alpha_0) - \lambda \cdot \dot{\alpha} \qquad (15)$$

Where $\tau_{assist}$ is the torque provided to the pilot by the exoskeleton, k is the simulated spring stiffness, $\alpha_0$ the

simulated equilibrium angle and $\lambda$ is the viscosity coefficient. The impedance parameters have been tuned in accordance with the pilots' feedback and in adequacy with the walking velocity. The evaluation of the controller is made considering its coherence with regards to the torque profiles from the literature. At this stage, the impact of the assistance on the energy expenditure or muscle activity has not been investigated.

TABLE I. PARAMETERS OF IMPEDANCE AT THE HIP FOR THE DIFFERENT PHASES AND PILOTS

| | Impedance parameters | | | |
|---|---|---|---|---|
| | Healthy pilot | | Pilot with NMD | |
| Phases | $k$ [Nm/deg] | $\alpha_0$ [deg] | $k$ [Nm/deg] | $\alpha_0$ [deg] |
| Static phase | 0,8 | 0 | 0,2 | 5 |
| Flexing phase | 1,5 | 30 | 0,6 | 30 |
| Extending phase | 1,4 | 0 | 0,4 | -5 |
| | Viscosity coefficient $\lambda$ = 0.11 [Nm s/deg] | | | |

B. Results

Both pilots were able to initiate and terminate walking at their convenience. The velocity threshold for the pilot with NMD is set to 20 deg/s while for the healthy pilot the value of 50 deg/s is good. The pilot with NMD requires a physical support in order to keep his balance while walking with the exoskeleton (can walk without the exoskeleton using a cane).
Fig.10 illustrates the hip angles and torques over one gait cycle (average over N>10 walking steps). The angles and torques from the literature are also reported in Fig.10. However, walking kinematics and dynamics from the literature corresponds to higher walking velocity than gait performed by pilots wearing the exoskeleton.

1) Hip flexion/extension trajectories

Ranges of motion (RoM) at the hip are respectively of 47deg and of 31deg for the healthy and the NMD pilots. The NMD pilot reaches the full extension early at 35% of the gait cycle while the healthy pilot reaches it about 47%. Both are in advance regarding the literature where the maximal extension is reached about 50-55% of the gait cycle. The assisted gait present both an overshoot of flexion about 6deg preceding heel strike. The healthy pilot has a short flexing phase with a high flexing velocity compared to a long flexing phase with low velocity for the NMD pilot. However, the static phase following the flexion is especially long for the healthy pilot.

2) Hip flexion/extension torque

The assistance torques for the healthy and the NMD pilots are very similar during the extending phase, the following static phase and the beginning of the flexing phase. These torque patterns from 10% to 85% of the gait cycle are similar but smaller than the torques from the literature. About the event of heel strike, however, high extension torques are reported in the literature, whereas the controller provides very small torques during this static phase. This aspect is discussed in the following.

C. Discussion

Both the healthy and the NMD pilots reported a synchronous and non-constraining motion of the exoskeleton while walking. In both cases, the action of the exoskeleton was reported as positive and impactful. Some differences in kinematics and torque patterns from the use of the exoskeleton compared to natural gait from the literature can be observed. The most notable event is the long static phase experienced by the healthy user wearing the exoskeleton during the heel strike event. During natural walking, one tends to have a continuous forward motion of the center of mass (CoM) in order to lower the energy cost. In the case of wearing the exoskeleton, the transition phase (static phase during heel strike) is managed differently compared to non-assisted gait. First, the exoskeleton does not provide a push-off phase that comes originally from a strong flexion propulsion of the ankle. Secondly, it is carefully designed to ensure that the motion is quickly stopped during double support so that the pilot has the possibility to terminate gait without much effort.
The assistive torques provided reach about 70% of peak torques reported by Stoquart et al. on treadmill for a bodyweight of 70 kg [24] at a walking velocity of 2 km/h. Further comparisons have not been made since the dynamics are quite different between treadmill and overground walking.

EXAMPLE 2

Introduction

Lower extremity exoskeletons have proven their abilities to help people with ambulation disorders, such as complete spinal cord injury (SCI) patients, see reference [25]. Powered exoskeletons provide a verticalized posture and assist the leg motions to reproduce gait. While remaining barriers have to be overcome for a larger use of exoskeleton in daily living (cost, need for an accompanying person, solicitation of both arms, etc.), their usage in rehabilitation is still promising as much as these obstacles can be removed or lowered.

The major concern of assisting robots for the rehabilitation of neurological impairments is to promote the sensory-motor recovery of the user, which implies a high level of human-robot interaction. In this case, exoskeletons can be referred to as haptic interfaces and need to meet a good backdrivability or zero-impedance mode. The exoskeleton AUTONOMYO™, see figure 5, is used in this example and is presented herein. Control strategies for the assistance and training of ambulation are keys in rehabilitation solutions and address at least the following characteristics:

1) Initiate and stop walking on the user's demand;
2) Adjustable level of assistance to the user's need - with adaptations at the joint level;
3) The gait is driven by the user while avoiding spatio-temporal constraints on motion.

Impedance based control has been previously implemented for the rehabilitation of gait. For instance, in reference [26] the authors propose a trajectory based controller on the gait trainer Lokomat™, which implements an attractive field that increases with the position error relative to the defined trajectory.

A variable impedance controller is proposed and described to fulfil the three targeted objectives stated above. The controller is implemented and tested on AUTONOMY™ with different parameters to evaluate how versatile and free of constraints it can be.

Material and Methods of example 2

The example 2 presented here evaluates the correspondence between the control approach and points 1-3. The variable impedance controller implemented on the AUTONOMY™ device is tested on a healthy user.

Exoskeleton AUTONOMYO™

AUTONOMY™ comprises six actuators for the hip and knee flexion/extension and for the hip adduction/abduction at both legs. The system is interfaced at the foot, the shank and the trunk of the body. The device weights about 25kg and is adaptable to user's height from 160cm to 205cm. See reference [21] for more details.

3-Phases variable impedance controller

The 3-phases variable impedance controller simulates spring-like behavior inspired from the muscle contributions during walking. The impedance is defined for the knee and hip joints by equation hereunder (16), where the stiffness k and attractive angle $\alpha_0$ can be adjusted to the need of the user.

$$\tau_{joint} = k \cdot (\alpha - \alpha_0) - b \cdot \dot{\alpha} \qquad (16)$$

$a$ and $\dot{a}$ are the measured joint angle and velocity respectively, b is a damping coefficient and $\tau$joint is the corresponding torque provided by the exoskeleton. The stiffness k and the attractive angle $\alpha_0$ can be adjusted to the need of the user. Note that the torque is limited to a maximal value of 25 Nm. The impedance varies depending on the walking phase, which may correspond to the swing-, stance- or a double support- phase. The gait is initiated, and phases are detected, through the hip flexion velocity. Full details are provided in reference [27]. Each step is triggered by a flexion motion of the hip that the user intent to perform. The actuations about the hip adduction/abduction were locked to a 0° position to focus on the flexion/extension assistance, a light support was needed to compensate for this mobility constraint.

Method of example 2

Trials have been performed overground over a distance of 18m with a healthy user (203cm, 95kg, 29 year old) wearing the exoskeleton. Parameters explored are attractive angles and stiffness for the hip and knee during swing and stance phases. The level of implication of the user described as low, comfortable or high were modulated to see the influence to the gait characteristics. Time to travel the 18m, number of steps, cadence, range of motion at each joint, etc. were collected to evaluate gait characteristics. The list of trials with parameters are shown on Table II hereunder.

TABLE II

TESTS AND PARAMETERS

| TRIAL # | HIP | | | | KNEE | | | | USER IMPLICATION |
|---|---|---|---|---|---|---|---|---|---|
| | SWING | | STANCE | | SWING | | STANCE | | |
| | $k$ | $\alpha_0$ | $k$ | $\alpha_0$ | $k$ | $\alpha_0$ | $k$ | $\alpha_0$ | |
| 1 | 2 | 40 | 2 | -10 | 0.5 | 50 | 0.5 | 5 | Comfortable |
| 2 | 2 | 60 | 2 | -10 | 0.5 | 50 | 0.5 | 5 | Low |
| 3 | 2 | 60 | 2 | -10 | 0.5 | 50 | 0.5 | 5 | Comfortable |
| 4 | 2 | 60 | 2 | -10 | 0.5 | 50 | 0.5 | 5 | High |
| 5 | 3 | 60 | 3 | -10 | 0.5 | 50 | 0.5 | 5 | Low |
| 6 | 3 | 60 | 3 | -10 | 0.5 | 50 | 0.5 | 5 | Comfortable |
| 7 | 3 | 60 | 3 | -10 | 0.5 | 50 | 0.5 | 5 | High |
| 8 | 0.5 | 40 | 0.5 | -10 | 0.5 | 20 | 0.5 | 5 | Comfortable |
| 9 | 0.5 | 40 | 2 | -20 | 0.5 | 20 | 1 | 5 | Comfortable |
| 10 | 2 | 40 | 0.5 | -20 | 1 | 20 | 0.5 | 5 | Comfortable |
| 11 | 2 | 40 | 2 | -20 | 1 | 20 | 1 | 5 | Comfortable |
| 12 | 2 | 40 | 2 | -20 | 1 | 20 | 1 | 5 | High |

Results or example 2

The gait characteristics resulting from the different parameters of the controllers and of the implication of the user are summarized in Table III hereunder. We observe that the implication of the user has a large effect on the walking speed and step length (Trials 4, 7 and 12). In opposition, the contribution of the stiffness coefficients is unclear as only poor modifications are observed in trials 8 to 11 while the stiffness is modulated during each phases of the gait. The range of motion of both hip and knee are correlated with the swing attractive angle, where the knee is correlated with the hip parameter.

TABLE III

GAIT CHARACTERISTICS RESULTING FROM TRIAL CONDITIONS

| TRIAL # | WALKING SPEED [m/s] (km/h) | HIP RANGE OF MOTION [°] | KNEE RANGE OF MOTION [°] | CADENCE [steps/min] | STEP LENGTH [m] |
|---|---|---|---|---|---|
| 1 | 0.37 (1.32) | 73 | 49 | 51 | 0.86 |
| 2 | 0.25 (0.9) | 78 | 65 | 30 | 1 |
| 3 | 0.40 (1.44) | 83 | 68 | 40 | 1.2 |
| 4 | 0.50 (1.8) | 89 | 71 | 40 | 1.5 |
| 5 | 0.29 (1.05) | 85 | 75 | 31 | 1.1 |
| 6 | 0.39 (1.41) | 88 | 70 | 39 | 1.2 |
| 7 | 0.46 (1.66) | 86 | 72 | 43 | 1.3 |
| 8 | 0.55 (1.99) | 56 | 62 | 52 | 1.3 |
| 9 | 0.47 (1.71) | 49 | 60 | 51 | 1.1 |
| 10 | 0.56 (2.01) | 51 | 54 | 56 | 1.2 |
| 11 | 0.51 (1.85) | 51 | 60 | 55 | 1.1 |
| 12 | 0.86 (3.09) | 56 | 45 | 74 | 1.4 |

Discussion of example 2

Results highlight the flexibility of the controller. The user is primarily in charge of the walking performances as demonstrated by results. This aspect is key regarding the motivation of the user and can provide feedback to therapists on the level of his implication in the training.

The contribution of the variable stiffness, however, did not correlate with the walking speed as it could have been expected. This observation can be explained by both a decrease of the user activity while facing more assistance and a limited difference in assistance due to the torque limit implemented in the exoskeleton.

Finally, tuning the attractive angles during the swing phase seems to have a strong positive impact on step length, but in opposition, reduces the walking cadence.

Conclusion of example 2

Simple (only three phases) variable impedance control can lead to a very flexible tool to assist and certainly rehabilitate people with partial gait impairments. Such an approach fulfils anticipated characteristics of customization of the assistance of the device while letting the user modulate walking velocity, cadence and step length.

V. Conclusion

Rigid transmissions offer the possibility to simulate impedance control where the level of accuracy lies within the dry friction range of torques. Active impedance allows a wide range of possibilities and evolutions that would be limited while using mechanical solutions such as series elastic actuators; although, active impedance is less energetically efficient as it can poorly store energy.

Using a rigid transmission over the hip joint of the AUTONOMY™ exoskeleton, for example, a full gait assistive strategy based on finite-state control is presented in the present application. Designed notably, but not exclusively, for people with muscle weakness or neurological disorders, particular attention is paid towards the triggers for the walking initiation and termination. A method actively involving the pilot in the gait through a detection of intention based on the hip flexion is presented herein. Results show that torques under 8Nm in flexion of the hip over a duration of 150ms are sufficient to control the device. The control strategy based on three states that are quite similar to the stance, swing and double support phases of the gait allows to provide a powerful assistive controller free from spatial and temporal constraints. Moreover, impedance offers an easy and intuitive tuning of assistance level and stride length.

The present description of embodiments of invention is neither intended nor should it be construed as being representative of the full extent and scope of the present invention. The present invention is set forth in various levels of detail herein as well as in the attached drawings and in the detailed description of the invention and no limitation as to the scope of the present invention is intended by either the inclusion or non inclusion of elements, components, etc. in the application. Additional aspects of the present invention will become more readily apparent from the present detailed description, particularly when taken together with the drawings.

Exemplary embodiments have been described to provide an overall understanding of the principles of the structure, function, manufacture, and use of the systems and methods disclosed herein. One or more examples of these embodiments are illustrated in the accompanying drawings. Those skilled in the art will understand that the systems and methods specifically described herein and illustrated in the accompanying drawings are non-limiting exemplary embodiments and that the scope of the present invention is defined not solely by the claims. The features illustrated or described in connection with one exemplary embodiment may be combined with the features of other embodiments. Such modifications and variations are intended to be included within the scope of the present invention. A number of problems with conventional methods and systems are noted herein and the methods and systems disclosed herein may address one or more of these problems. By describing these problems, no admission as to their knowledge in the art is intended. A person having ordinary skill in the art will appreciate that, although certain methods and systems are described herein the scope of the present invention is not so limited. Moreover, while this invention has been described in conjunction with a number of embodiments, it is evident that many alternatives, modifications and variations would be or are apparent to those of ordinary skill in the applicable arts. Accordingly, it is intended to embrace all such modifications that are within the scope of the appended claims.

REFERENCES

[1] R. Riener, L. Lunenburger, S. Jezernik, M. Anderschitz, G. Colombo, and V. Dietz, "Patient-cooperative strategies for robot-aided treadmill training: first experimental results," IEEE Transactions on Neural Systems and Rehabilitation Engineering, vol. 13, no. 3, pp. 380-394, Sep. 2005.

[2] J. F. Veneman, R. Kruidhof, E. E. G. Hekman, R. Ekkelenkamp, E. H. F. V. Asseldonk, and H. van der Kooij, "Design and Evaluation of the LOPES Exoskeleton Robot for Interactive Gait Rehabilitation," IEEE Transactions on Neural Systems and Rehabilitation Engineering, vol. 15, no. 3, pp. 379-386, Sep. 2007.

[3] L. Marchal-Crespo and D. J. Reinkensmeyer, "Review of control strategies for robotic movement training after neurologic injury," Journal of NeuroEngineering and Rehabilitation, vol. 6, p. 20, Jun. 2009.

[4] S. K. Au, J. Weber, and H. Herr, "Powered Ankle-Foot Prosthesis Improves Walking Metabolic Economy," IEEE Transactions on Robotics, vol. 25, no. 1, pp. 51-66, Feb. 2009.

[5] S. Au, M. Berniker, and H. Herr, "Powered ankle-foot prosthesis to assist level-ground and stair-descent gaits," Neural Networks, vol. 21, no. 4, pp. 654-666, May 2008.

[6] K. Fite, J. Mitchell, F. Sup, and M. Goldfarb, "Design and Control of an Electrically Powered Knee Prosthesis," in 2007 IEEE 10th International Conference on Rehabilitation Robotics, 2007, pp. 902-905.

[7] B. E. Lawson, A. H. Shultz, and M. Goldfarb, "Evaluation of a coordinated control system for a pair of powered transfemoral prostheses," in 2013 IEEE International Conference on Robotics and Automation, 2013, pp. 3888-3893.

[8] M. Liu, F. Zhang, P. Datseris, and H. (Helen) Huang, "Improving Finite State Impedance Control of Active-Transfemoral Prosthesis Using Dempster-Shafer Based State Transition Rules," J Intell Robot Syst, vol. 76, no. 3-4, pp. 461-474, Dec. 2014.

[9] D. Zlatnik, B. Steiner, and G. Schweitzer, "Finite-state control of a trans-femoral (TF) prosthesis," IEEE Transactions on Control Systems Technology, vol. 10, no. 3, pp. 408-420, May 2002.

[10] C. D. Hoover, G. D. Fulk, and K. B. Fite, "Stair Ascent With a Powered Transfemoral Prosthesis Under Direct Myoelectric Control," IEEE/ASME Transactions on Mechatronics, vol. 18, no. 3, pp. 1191-1200, Jun. 2013.

[11] D. L. Grimes, "An active multi-mode above knee prosthesis controller," Thesis, Massachusetts Institute of Technology, 1979.

[12] A. W. Boehler, K. W. Hollander, T. G. Sugar, and D. Shin, "Design, implementation and test results of a robust control method for a powered ankle foot orthosis (AFO)," in 2008 IEEE International Conference on Robotics and Automation, 2008, pp. 2025-2030.

[13] Y. D. Li and E. T. Hsiao-Wecksler, "Gait mode recognition and control for a portable-powered ankle-foot orthosis," in 2013 IEEE 13th International Conference on Rehabilitation Robotics (ICORR), 2013, pp. 1-8.

[14] R. J. Farris, H. A. Quintero, and M. Goldfarb, "Performance Evaluation of a Lower Limb Exoskeleton for Stair Ascent and Descent with Paraplegia," Conf Proc IEEE Eng Med Biol Soc, vol. 2012, pp. 1908-1911, 2012.

[15] S. Murray and M. Goldfarb, "Towards the use of a lower limb exoskeleton for locomotion assistance in individuals with neuromuscular locomotor deficits," in 2012 Annual International Conference of the IEEE Engineering in Medicine and Biology Society, 2012, pp. 1912-1915.

[16] H. A. Quintero, R. J. Farris, C. Hartigan, I. Clesson, and M. Goldfarb, "A Powered Lower Limb Orthosis for Providing Legged Mobility in Paraplegic Individuals," Top Spinal Cord Inj Rehabil, vol. 17, no. 1, pp. 25-33, 2011.

[17] H. Kawamoto, S. Kanbe, and Y. Sankai, "Power assist method for HAL-3 estimating operator's intention based on motion information," in The 12th IEEE International Workshop on Robot and Human Interactive Communication, 2003. Proceedings. ROMAN 2003., 2003, pp. 67-72.

[18] Y. Sankai, "HAL: Hybrid Assistive Limb Based on Cybernics," in Robotics Research, Springer, Berlin, Heidelberg, 2010, pp. 25-34.

[19] D. A. Winter, "Kinematic and kinetic patterns in human gait: Variability and compensating effects," Human Movement Science, vol. 3, no. 1-2, pp. 51-76, Mar. 1984.

[20] S. Ounpuu, "The biomechanics of walking and running," Clin Sports Med, vol. 13, no. 4, pp. 843-863, Oct. 1994.

[21] A. Ortlieb, M. Bouri, R. Baud, and H. Bleuler, "An assistive lower limb exoskeleton for people with neurological gait disorders," in 2017 International Conference on Rehabilitation Robotics (ICORR), 2017, pp. 441-446.

[22] A. Ortlieb, J. Olivier, M. Bouri, H. Bleuler, and T. Kuntzer, "From gait measurements to design of assistive orthoses for people with neuromuscular diseases," in 2015 IEEE International Conference on Rehabilitation Robotics (ICORR), 2015, pp. 368-373.

[23] R. Baud, A. Ortlieb, J. Olivier, M. Bouri, and H. Bleuler, "HiBSO Hip Exoskeleton: Toward a Wearable and Autonomous Design," in New Trends in Medical and Service Robots, 2016, pp. 185-195.

[24] G. Stoquart, C. Detrembleur, and T. Lejeune, "Effect of speed on kinematic, kinetic, electromyographic and energetic reference values during treadmill walking," Neurophysiologie Clinique/Clinical Neurophysiology, vol. 38, no. 2, pp. 105-116, Apr. 2008.

[25] L. E. Miller, A. K. Zimmermann, and W. G. Herbert, "Clinical effectiveness and safety of powered exoskeleton-assisted walking in patients with spinal cord injury: systematic review with meta-analysis," Med Devices (Auckl), vol. 9, pp. 455-466, Mar. 2016.

[26] R. Riener, L. Lunenburger, S. Jezernik, M. Anderschitz, G. Colombo, and V. Dietz, "Patient-cooperative strategies for robot-aided treadmill training: first experimental results," IEEE Transactions on Neural Systems and Rehabilitation Engineering, vol. 13, no. 3, pp. 380-394, Sep. 2005.

[27] A. Ortlieb et al., "An Active Impedance Controller to Assist Gait in People with Neuromuscular Diseases: Implementation to the Hip Joint of the AUTONOMYO Exoskeleton," presented at the BioRob, Enschede, Netherlands, 2018.

## Claims

1. A single- or multi- powered robotic system, such as an exoskeleton, a prosthesis or a collaborative robot, that is physically interacting with a user, said system comprising at least one actuated joint;

   wherein the robot joint(s) is/are controlled in force by a low level controller using an impedance control;
   wherein the joint(s) output force(s) is/are determined by a high level controller using a finite state control;
   **characterised in that**
   the high level controller finite state control is governed by a voluntary motion from the user reaching a predetermined trigger, wherein said motion is a hip motion.

2. The robotic system as defined in claim 1, wherein the finite state control comprises at least two phases simulating mechanical impedance behaviour including static, flexing and extending.

3. The robotic system as defined in claim 2, wherein it comprises an additional phase.

4. The robotic system as defined in claim 3, wherein said additional phase is triggered by a contact detection.

5. The robotic system as defined in the preceding claims, wherein the motion is a velocity.

6. The robotic system as defined in one of the preceding claims, wherein the impedance behaviour of each phase and joint is parameterized and tuned/adapted to fit the user's needs.

7. The robotic system as defined in one of the preceding claims, wherein the finite state and phases are adapted to a walking activity.

8. The robotic system as defined in one of the preceding claims, wherein the robotic system is worn by the user or is a remote system controlled by the user.

9. The robotic system as defined in one of the preceding claims, wherein said actuated joint(s) comprise hip flexion and/or knee flexion and/or hip abduction and/or ankle flexion.


## Patentansprüche

1. Einfach oder mehrfach angetriebenes robotisches System wie etwa ein Außenskelett, eine Prothese oder ein assistierender Roboter, das mit einem Benutzer interagiert, wobei das System wenigstens ein betätigtes Gelenk umfasst;

   wobei die Kraft des einen oder der mehreren Robotergelenke durch einen Controller niedriger Ebene unter Nutzung einer Impedanzsteuerung gesteuert wird;
   wobei die von dem einen oder den mehreren Gelenken ausgegebenen Kräfte durch einen Controller hoher Ebene unter Nutzung einer Steuerung finiter Zustände bestimmt werden;
   **dadurch gekennzeichnet, dass**
   die Steuerung finiter Zustände durch den Controller hoher Ebene durch eine willkürliche Bewegung des Benutzers, die eine vorgegebene Auslöseschwelle erreicht, gesteuert wird, wobei die Bewegung eine Hüftbewegung ist.

2. Robotisches System nach Anspruch 1, wobei die Steuerung finiter Zustände wenigstens zwei Phasen umfasst, die ein Verhalten mechanischer Impedanz, das statisch, Biegen und Strecken umfasst, simulieren.

3. Robotisches System nach Anspruch 2, das eine zusätzliche Phase umfasst.

4. Robotisches System nach Anspruch 3, wobei die zusätzliche Phase durch die Detektion eines Kontakts ausgelöst wird.

5. Robotisches System nach den vorhergehenden Ansprüchen, wobei die Bewegung eine Geschwindigkeit ist.

**6.** Robotisches System nach einem der vorhergehenden Ansprüche, wobei das Impedanzverhalten jeder Phase und jedes Gelenks parametrisiert und abgestimmt/angepasst wird, damit es zu den Bedürfnissen des Benutzers passt.

**7.** Robotisches System nach einem der vorhergehenden Ansprüche, wobei der finite Zustand und die Phasen an eine Gehaktivität angepasst sind.

**8.** Robotisches System nach einem der vorhergehenden Ansprüche, wobei das robotische System von dem Benutzer getragen wird oder ein durch den Benutzer gesteuertes Fernsteuerungssystem ist.

**9.** Robotisches System nach einem der vorhergehenden Ansprüche, wobei das eine oder die mehreren betätigten Gelenke eine Hüftbewegung und/oder eine Kniebewegung und/oder eine Hüftspreizung und/oder eine Sprunggelenkprozedur sind.

**Revendications**

**1.** Système robotique à alimentation simple ou multiple, tel qu'un exosquelette, une prothèse ou un robot collaboratif, qui interagit physiquement avec un utilisateur, ledit système comportant au moins une articulation actionnée ;

l'articulation ou les articulations de robot étant commandées en effort par un moyen de commande de bas niveau à l'aide d'une commande d'impédance ;
la ou les forces de sortie de l'articulation ou des articulations étant déterminées par un moyen de commande de haut niveau à l'aide d'une commande à états finis ;
**caractérisé en ce que**
la commande à états finis du moyen de commande de haut niveau est régie par le fait qu'un mouvement volontaire de la part de l'utilisateur atteigne un déclencheur prédéterminé, ledit mouvement étant un mouvement de la hanche.

**2.** Système robotique selon la revendication 1, la commande à états finis comportant au moins deux phases simulant un comportement d'impédance mécanique comprenant un comportement statique, une flexion et une extension.

**3.** Système robotique selon la revendication 2, celui-ci comportant une phase supplémentaire.

**4.** Système robotique selon la revendication 3, ladite phase supplémentaire étant déclenchée par une détection de contact.

**5.** Système robotique selon les revendications précédentes, le mouvement étant une vitesse.

**6.** Système robotique selon une des revendications précédentes, le comportement d'impédance de chaque phase et de chaque articulation étant paramétré et accordé/adapté pour s'ajuster aux besoins de l'utilisateur.

**7.** Système robotique selon une des revendications précédentes, l'état fini et les phases étant adaptés à une activité de marche.

**8.** Système robotique selon une des revendications précédentes, le système robotique étant porté par l'utilisateur ou étant un système distant commandé par l'utilisateur.

**9.** Système robotique selon une des revendications précédentes, ladite ou lesdites articulations actionnées comportant une flexion de la hanche et/ou une flexion du genou et/ou une abduction de la hanche et/ou une flexion de la cheville.

Figure 1

$$f_{grav}(x) = l \cdot M \cdot g$$

or

$$f_{grav}(x) = l \cdot M \cdot g \cdot sin(x - x_{grav})$$

$$\tau = \underbrace{k(x) \cdot (x - x_0) + \lambda \cdot \dot{x}} + f_{grav}(x)$$

**Muscle behavior:**

$$k(x) = k = constant$$

or

$$k(x) = sigmoid = k_1 \cdot tanh(k_2 \cdot x)$$

*Output*
$\tau$: torque at joint

*Measured data*
$x$: joint position
$\dot{x}$: joint velocity
$x_{grav}$: position offset relatively
         to gravity orientation

*Parameters*
$k, k_1, k_2$: stiffness constants
$x_0$: equilibrium position
$\lambda$: friction constant
$l$: distance from joint to the mass
$M$: mass
$g$: gravity constant

Figure 2

Figure 3

Figure 4

Figure 5

Figure 6

Figure 7

CONTROLLER PHASES DURING GAIT AND GAIT INITIATION

Figure 8

Figure 9

HIP ANGLE AS MEASURED WITH ASSISTANCE FROM THE EXOSKELETON AND
CURVES GIVEN FROM LITERATURE

FULL HIP TORQUE FOR A GAIT CYCLE BASED ON THE LITERATURE

ASSISTIVE HIP TORQUE PROVIDED BY THE EXOSKELETON'S CONTROLLER

CONTROLLER'S PHASES: HEALTHY PILOT

| STATIC PHASE | EXTENDING PHASE | STATIC PHASE | FLEXING PHASE | STATIC PHASE |

CONTROLLER'S PHASES: PILOT WITH NMD

| EXTENDING PHASE | STATIC PHASE | FLEXING PHASE | STATIC PHASE |

GAIT PHASES FROM LITTERATURE

| DOUBLE SUPPORT | STANCE PHASE | DOUBLE SUPPORT | SWING PHASE |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 18190653
- US 2011257764 A1
- WO 2018065913 A

### Non-patent literature cited in the description

- **R. RIENER** ; **L. LUNENBURGER** ; **S. JEZERNIK** ; **M. ANDERSCHITZ** ; **G. COLOMBO** ; **V. DIETZ**. Patient-cooperative strategies for robot-aided treadmill training: first experimental results. *IEEE Transactions on Neural Systems and Rehabilitation Engineering*, September 2005, vol. 13 (3), 380-394
- **J. F. VENEMAN** ; **R. KRUIDHOF** ; **E. E. G. HEKMAN** ; **R. EKKELENKAMP** ; **E. H. F. V. ASSELDONK** ; **H. VAN DER KOOIJ**. Design and Evaluation of the LOPES Exoskeleton Robot for Interactive Gait Rehabilitation. *IEEE Transactions on Neural Systems and Rehabilitation Engineering*, September 2007, vol. 15 (3), 379-386
- **L. MARCHAL-CRESPO** ; **D. J. REINKENSMEYER**. Review of control strategies for robotic movement training after neurologic injury. *Journal of NeuroEngineering and Rehabilitation*, June 2009, vol. 6, 20
- **S. K. AU** ; **J. WEBER** ; **H. HERR**. Powered Ankle-Foot Prosthesis Improves Walking Metabolic Economy. *IEEE Transactions on Robotics*, February 2009, vol. 25 (1), 51-66
- **S. AU** ; **M. BERNIKER** ; **H. HERR**. Powered ankle-foot prosthesis to assist level-ground and stair-descent gaits. *Neural Networks*, May 2008, vol. 21 (4), 654-666
- **K. FITE** ; **J. MITCHELL** ; **F. SUP** ; **M. GOLDFARB**. Design and Control of an Electrically Powered Knee Prosthesis. *2007 IEEE 10th International Conference on Rehabilitation Robotics*, 2007, 902-905
- **B. E. LAWSON** ; **A. H. SHULTZ** ; **M. GOLDFARB**. Evaluation of a coordinated control system for a pair of powered transfemoral prostheses. *2013 IEEE International Conference on Robotics and Automation*, 2013, 3888-3893
- **M. LIU** ; **F. ZHANG** ; **P. DATSERIS** ; **H. (HELEN) HUANG**. Improving Finite State Impedance Control of Active-Transfemoral Prosthesis Using Dempster-Shafer Based State Transition Rules. *J Intell Robot Syst*, December 2014, vol. 76 (3-4), 461-474
- **D. ZLATNIK** ; **B. STEINER** ; **G. SCHWEITZER**. Finite-state control of a trans-femoral (TF) prosthesis. *IEEE Transactions on Control Systems Technology*, May 2002, vol. 10 (3), 408-420
- **C. D. HOOVER** ; **G. D. FULK** ; **K. B. FITE**. Stair Ascent With a Powered Transfemoral Prosthesis Under Direct Myoelectric Control. *IEEE/ASME Transactions on Mechatronics*, June 2013, vol. 18 (3), 1191-1200
- An active multi-mode above knee prosthesis controller. **D. L. GRIMES**. Thesis. Massachusetts Institute of Technology, 1979
- **A. W. BOEHLER** ; **K. W. HOLLANDER** ; **T. G. SUGAR** ; **D. SHIN**. Design, implementation and test results of a robust control method for a powered ankle foot orthosis (AFO). *2008 IEEE International Conference on Robotics and Automation*, 2008, 2025-2030
- **Y. D. LI** ; **E. T. HSIAO-WECKSLER**. Gait mode recognition and control for a portable-powered ankle-foot orthosis. *2013 IEEE 13th International Conference on Rehabilitation Robotics (ICORR)*, 2013, 1-8
- **R. J. FARRIS** ; **H. A. QUINTERO** ; **M. GOLDFARB**. Performance Evaluation of a Lower Limb Exoskeleton for Stair Ascent and Descent with Paraplegia. *Conf Proc IEEE Eng Med Biol Soc*, 2012, vol. 2012, 1908-1911
- **S. MURRAY** ; **M. GOLDFARB**. Towards the use of a lower limb exoskeleton for locomotion assistance in individuals with neuromuscular locomotor deficits. *2012 Annual International Conference of the IEEE Engineering in Medicine and Biology Society*, 2012, 1912-1915
- **H. A. QUINTERO** ; **R. J. FARRIS** ; **C. HARTIGAN** ; **I. CLESSON** ; **M. GOLDFARB**. A Powered Lower Limb Orthosis for Providing Legged Mobility in Paraplegic Individuals. *Top Spinal Cord Inj Rehabil*, 2011, vol. 17 (1), 25-33

- **H. KAWAMOTO** ; **S. KANBE** ; **Y. SANKAI**. Power assist method for HAL-3 estimating operator's intention based on motion information. *The 12th IEEE International Workshop on Robot and Human Interactive Communication, 2003. Proceedings. ROMAN*, 2003, vol. 2003, 67-72
- HAL: Hybrid Assistive Limb Based on Cybernics. **Y. SANKAI**. Robotics Research. Springer, 2010, 25-34
- **D. A. WINTER**. Kinematic and kinetic patterns in human gait: Variability and compensating effects. *Human Movement Science*, March 1984, vol. 3 (1-2), 51-76
- **S. OUNPUU**. The biomechanics of walking and running. *Clin Sports Med*, October 1994, vol. 13 (4), 843-863
- **A. ORTLIEB** ; **M. BOURI** ; **R. BAUD** ; **H. BLEULER**. An assistive lower limb exoskeleton for people with neurological gait disorders. *2017 International Conference on Rehabilitation Robotics (ICORR)*, 2017, 441-446
- **A. ORTLIEB** ; **J. OLIVIER** ; **M. BOURI** ; **H. BLEULER** ; **T. KUNTZER**. From gait measurements to design of assistive orthoses for people with neuromuscular diseases. *2015 IEEE International Conference on Rehabilitation Robotics (ICORR)*, 2015, 368-373
- **R. BAUD** ; **A. ORTLIEB** ; **J. OLIVIER** ; **M. BOURI** ; **H. BLEULER**. HiBSO Hip Exoskeleton: Toward a Wearable and Autonomous Design. *New Trends in Medical and Service Robots*, 2016, 185-195
- **G. STOQUART** ; **C. DETREMBLEUR** ; **T. LEJEUNE**. Effect of speed on kinematic, kinetic, electromyographic and energetic reference values during treadmill walking. *Neurophysiologie Clinique/Clinical Neurophysiology*, April 2008, vol. 38 (2), 105-116
- **L. E. MILLER** ; **A. K. ZIMMERMANN** ; **W. G. HERBERT**. Clinical effectiveness and safety of powered exoskeleton-assisted walking in patients with spinal cord injury: systematic review with meta-analysis. *Med Devices (Auckl)*, March 2016, vol. 9, 455-466
- **A. ORTLIEB et al.** An Active Impedance Controller to Assist Gait in People with Neuromuscular Diseases: Implementation to the Hip Joint of the AUTONOMYO Exoskeleton. *BioRob, Enschede, Netherlands*, 2018